# FASCICULE DE BREVET EUROPEEN

(11) **EP 1 846 287 B1**
(45) Date de publication et mention de la délivrance du brevet: **07.01.2009**
(21) Numéro de dépôt: 06709491.2
(22) Date de dépôt: 09.02.2006
(51) Int. Cl.: B63C 9/00, G01S 5/28, G01S 15/74

(54) **DISPOSITIF DE SIGNALISATION ET DE LOCALISATION D'UN INDIVIDU A LA MER ET PROCEDE POUR SA MISE EN OEUVRE**
MELDE- UND LOKALISIERUNGSVORRICHTUNG FÜR EINE PERSON IM MEER UND VERWENDUNGSVERFAHREN DAFÜR
SIGNALLING AND LOCALIZATION DEVICE FOR AN INDIVIDUAL IN THE SEA AND METHOD FOR USE THEREOF

(30) Priorité: 10.02.2005 FR 0550395
(43) Date de publication de la demande: 24.10.2007
(73) Titulaire: Besson, Jean-Yves, 83500 La Seyne sur Mer (FR); Leal, Stéphane, 69230 Saint Genis Laval (FR)
(72) Inventeur: Besson, Jean-Yves, 83500 La Seyne sur Mer (FR); Leal, Stéphane, 69230 Saint Genis Laval (FR)
(74) Mandataire: Jeannet, Olivier
(86) Numéro de dépôt international: PCT/FR2006/050112
(87) Numéro de publication internationale: WO 2006/085030

(56) Documents cités:
- DE-A1- 4 306 773
- FR-A- 2 851 340
- US-A- 4 813 025
- US-A- 5 185 605
- US-A- 5 463 598
- US-A- 5 570 323
- US-A- 5 650 770
- US-A- 5 886 635
- US-B1- 6 222 484
- PATENT ABSTRACTS OF JAPAN vol. 1998, no. 08, 30 juin 1998 (1998-06-30) & JP 10 081297 A (MITSUBISHI HEAVY IND LTD), 31 mars 1998 (1998-03-31)

## Description

### DOMAINE DE L'INVENTION

La présente invention concerne un dispositif de signalisation destiné à permettre la localisation rapide et automatique d'un individu à la mer. En particulier, un tel dispositif permet la localisation d'une personne tombée à la mer équipée d'un tel émetteur, ou d'un plongeur sous marin, dans le but d'indiquer le plus rapidement possible, sa position aux navires et aux sauveteurs dépêchés sur zone par voie maritime ou aérienne, ou au bateau d'acheminement des plongeurs au niveau d'un site.

La présente invention concerne également un procédé de signalisation destiné à permettre la localisation rapide et automatique d'un homme à la mer, muni d'une partie du dispositif en question.

### ETAT ANTERIEUR DE LA TECHNIQUE

Dans le domaine maritime, en particulier en matière de sauvetage en mer, il est souvent indispensable voire vital de pouvoir localiser précisément et rapidement des personnes se trouvant en mer, comme par exemple des plongeurs accompagnés par un navire, mais surtout des personnes tombées accidentellement à la mer ou des véliplanchistes, et qu'il convient de secourir au plus vite. L'application la plus contraignante en termes d'urgence est évidemment la localisation d'une personne accidentée. L'exposé de la présente invention est donc davantage détaillé en rapport avec cette application, mais l'homme du métier est apte à en transposer aisément les enseignements à d'autres applications, explicitées ou non.

L'augmentation et la mutation des activités de loisir nautique entraînent un nombre croissant chaque année d'accidents, souvent aggravés par le fait que leurs victimes se retrouvent parfois isolées en mer, c'est-à-dire incapables de rallier par leurs propres moyens un emplacement sécuritaire, que ce soit le pont d'un navire ou la côte la plus proche. Dans ce type de situation critique, il est d'évidence indispensable de localiser la personne afin de diriger efficacement les sauveteurs. Cependant, la durée de localisation constitue un facteur primordial pour la réussite du sauvetage, outre les conditions climatiques et la capacité de la personne à séjourner dans l'eau.

Il est connu pour cela d'employer des dispositifs de signalisation par ondes électromagnétiques hertziennes à haute fréquence. Dans de tels dispositifs, les ondes HF sont émises par un émetteur équipant la personne et reçues par un récepteur hertzien, type station de secours ou satellite de système de positionnement global, tel que celui désigné par les noms GPS ou Galileo.

Cependant, si de tels systèmes sont miniaturisables, de sorte qu'ils peuvent être intégrés dans un boîtier portable par l'utilisateur, ils se heurtent à un inconvénient rédhibitoire dès lors que le pronostic vital est en jeu, tel que dans les eaux froides, à savoir qu'en raison du type de satellites, et en l'espèce géostationnaire, au niveau desquels les signaux émis sont susceptibles d'être détectés, la durée de localisation peut varier de cinq minutes à plusieurs heures.

En outre, ainsi que le soulignent par exemple les enseignements décrits dans les documents FR-A-2 832 246 ou US-A-5 886 635, les ondes hertziennes ne se propagent pas dans l'eau. Il est donc nécessaire de prévoir un équipement de la personne incluant un moyen de flottaison pour l'émetteur radio. En effet, lorsque la personne est partiellement et/ou provisoirement immergée dans l'eau, les récepteurs ne peuvent recevoir le signal de détresse émis sous l'eau, ce qui peut survenir malgré le moyen de flottaison, notamment par temps de forte houle. Dans ce cas, ces dispositifs sont même quasiment totalement inefficaces, puisque les vagues constituent autant d'obstacles à la propagation des ondes hertziennes.

De tels systèmes sont donc *a fortiori* inutilisables pour la localisation de plongeurs immergés. Quant à leur utilisation pour le sauvetage, nonobstant leur efficacité conditionnée par l'état d'immersion de l'émetteur, de tels systèmes présentent l'inconvénient d'être encombrants du fait du moyen de flottaison, lequel, d'après la loi d'Archimède et quelle que soit sa densité, doit occuper un certain volume pour assurer sa fonction. Cet encombrement peut être source de gêne pour un membre d'équipage appelé à participer aux manoeuvres du navire.

Par ailleurs, on connaît des dispositifs de signalisation dont les émetteurs émettent des ondes ultrasonores, c'est-à-dire des ondes acoustiques de fréquence supérieure à 20 kHz. De tels dispositifs sont adaptés à la communication d'informations, éventuellement d'alerte, entre plongeurs ou entre un plongeur et un bateau proche, notamment son bateau accompagnateur.

Ainsi, le document FR-A-2 740 426 décrit un dispositif de signalisation mettant en oeuvre un émetteur d'ondes ultrasonores. Si la communication d'informations est rendue possible, il ne permet cependant pas la localisation par le récepteur associé, ni, *a fortiori*, la retransmission du signal d'alerte à une organisation de sauvetage.

Par ailleurs, les documents EP-A-1 178 328 et US-A-6 272 073 décrivent des dispositifs de signalisation au moyen d'un émetteur d'ondes ultrasonores, qui permettent la communication d'informations et également la localisation par le récepteur associé de l'émetteur d'un signal de détresse.

Toutefois, ces dispositifs ne permettent pas d'alerter rapidement et automatiquement, c'est-à-dire sans intervention humaine, les organisations de sauvetage situées à distance, souvent à terre. Or, les moyens de sauvetage embarqués sur le bateau accompagnant les plongeurs peuvent se révéler insuffisants dans certaines situations et la rapidité de la retransmission du signal d'alerte par un membre de son équipage peut s'avérer trop longue, voire impossible en cas de chavirage.

En outre, les dispositifs décrits nécessitent une action volontaire de l'homme à la mer, lequel doit donc être suffisamment conscient pour opérer le déclenchement de l'émission d'un signal de détresse par son émetteur. Or, dans le cas d'une personne tombée à la mer, cette condition de conscience n'est pas toujours remplie, outre le fait que, sous l'effet de la panique ou des efforts accomplis pour surnager, cette personne pourrait tout simplement omettre d'émettre un S.O.S.

On a également décrit, par exemple dans les documents DE 43 06 773, FR 2 851 340 et US 6 222 484 un dispositif tendant au même objectif.

La présente invention a donc pour objet un dispositif et un procédé de signalisation destiné à permettre la localisation rapide et automatique d'un homme à la mer, notamment à des personnes aptes à porter assistance à la personne ainsi en détresse.

### EXPOSE DE L'INVENTION

L'invention a donc pour objet un dispositif de signalisation destiné à permettre la localisation rapide et automatique d'un individu à la mer, comprenant :
- un émetteur - récepteur d'ondes ultrasonores, constituant un organe individuel d'alerte, porté par l'individu à la mer ou susceptible d'y tomber, destiné à émettre de manière isotrope des ondes porteuses de signaux primaires et à capter des signaux secondaires ;
- un moyen de surveillance de surface, positionné sur la surface de la mer, et muni :
   - d'une antenne immergée, apte à capter les signaux primaires émis par l'organe individuel d'alerte,
   - de moyens d'émission de signaux ultrasonores secondaires, ces moyens d'émission étant déclenchés essentiellement par la réception par l'antenne immergée des signaux primaires ;
   - de moyens aptes à calculer la position de l'organe individuel d'alerte en fonction des signaux ultrasonores émis par l'organe individuel d'alerte en réponse aux signaux ultrasonores secondaires et à convertir ces informations en coordonnées d'un système de positionnement global, tel que le GPS ;
   - d'un organe d'émission par ondes hertziennes apte à émettre des signaux représentatifs de ces coordonnées au niveau d'un poste de traitement de l'alerte, mobile ou immobile, et muni d'un récepteur hertzien.

Ainsi, une personne équipée d'un émetteur intégré dans un tel dispositif de signalisation peut être localisée rapidement et automatiquement par l'intermédiaire d'échanges de signaux, et, partant, elle peut être secourue ou simplement localisée de manière simple et rapide.

Le moyen de surveillance de surface joue ainsi un rôle de récepteur-relais ou de réémetteur.

Selon l'invention, l'antenne portée par le moyen de surveillance de surface peut être multiple ou présenter une surface déterminée.

De plus, selon l'invention, l'organe individuel d'alerte est muni :
- de moyens de déclenchement automatique ou manuel de l'émission des signaux ultrasonores primaires ;
- de moyens de déclenchement automatique de signaux ultrasonores en réponse aux signaux secondaires émis par le récepteur-relais constitué par le moyen de surveillance de surface.

Selon une forme de réalisation avantageuse de l'invention, les moyens de déclenchement automatique de l'émission ultrasonore comprennent un système apte à détecter l'état d'immersion d'au moins une zone de l'émetteur, tel qu'un contacteur humide par exemple.

Selon une autre forme de réalisation pratique de l'invention, l'organe individuel d'alerte comprend :
- une source d'alimentation électrique autonome, comportant éventuellement un accumulateur électrique ;
- la source d'émissions d'ondes ultrasonores ;
- un organe de mesure de profondeur ;
- un microprocesseur ;
- une sonde de température apte à mesurer la température de l'eau et à la communiquer au microprocesseur ;
- une mémoire non-volatile destinée à enregistrer les paramètres des signaux émis et reçus.

Cette mémoire peut en outre intégrer un moyen d'individualisation dudit organe, ce dernier pouvant cependant être constitué par du numéro de code traditionnellement attribué au circuit intégré, susceptible d'être mis en oeuvre au sein de l'organe individuel d'alerte.

En pratique, le moyen de surveillance de surface est solidaire d'une bouée ou d'un bâtiment de surface, typiquement un bateau, présentant une partie immergée logeant la ou les antennes d'émission et de captation des ondes ultrasonores, et une partie émergée logeant les moyens d'émission par ondes hertziennes.

Par ailleurs, l'invention concerne également un procédé de signalisation destiné à permettre la localisation rapide et automatique d'un individu à la mer, consistant :
- à induire volontairement ou automatiquement, en fonction des circonstances, l'activation d'un organe individuel d'alerte porté par un individu présent dans la mer, de telle sorte à engendrer l'émission isotrope de signaux primaires par ondes ultrasonores ;
- à capter lesdits signaux primaires et à induire en retour des signaux ultrasonores secondaires, ces derniers étant captés par l'organe individuel d'alerte afin d'induire à leur tour en réponse de nouvelles émissions de signaux par voie ultrasonore dudit organe individuel d'alerte, de telle sorte à permettre la localisation de l'individu à la mer, porteur de l'organe individuel d'alerte - émetteur desdits signaux primaires ;
- à traiter les signaux reçus en réponse aux signaux ultrasonores secondaires pour déterminer en coordonnées d'un système de positionnement global, tel que le GPS, la position de l'individu à la mer ;
- à émettre des signaux représentatifs de ces coordonnées par ondes hertziennes de manière à indiquer la localisation de l'individu à la mer, et le cas échéant, déclencher les opérations de secours ad hoc.

Selon une forme de réalisation de l'invention, l'émission de signaux primaires comprend deux phases successives :
- une première phase commençant immédiatement après l'activation de l'organe individuel d'alerte, au cours de laquelle les signaux primaires émis sont de puissance d'émission faible, et sont cadencés à intervalles réguliers ou non selon des séquences de faible période et de durée déterminée,
- une seconde phase consécutive à ladite première phase, au cours de laquelle les signaux primaires sont de puissance d'émission forte et sont cadencés à intervalles réguliers ou non selon des séquences de période plus longue.

Selon l'invention, l'activation de l'organe individuel d'alerte induit une étape préalable consistant à mesurer la température de l'eau dans laquelle est située l'homme à la mer, et ce au moyen d'une sonde de température logée dans ledit organe individuel d'alerte, cette étape pouvant être réalisée concomitamment avec le déclenchement de l'émission des signaux primaires.

Selon l'invention, le déclenchement de l'émission desdits signaux primaires est réalisé de manière automatique ou résulte d'un acte positif de l'homme à la mer.

De manière avantageuse, des intervalles de repos sont ménagés entre deux périodes d'émission de signaux primaires, la durée desdits intervalles de repos pouvant ne pas être constante, afin d'éviter de risquer d'être en phase avec la houle, et étant en outre fonction de la température de l'eau mesurée par la sonde.

D'autre part, l'invention concerne également un procédé de signalisation et de localisation d'un individu à la mer, comprenant les étapes suivantes :
- former un réseau composé d'une pluralité de moyens de surveillance de surface, chacun desdits moyens étant apte à mettre en oeuvre un procédé tel que précédemment exposé de signalisation et de localisation d'un individu à la mer équipé d'un organe individuel intégrant un moyen d'individualisation ;
- en cas d'absence prolongée de réception des signaux ultrasonores émis par l'organe individuel en réponse à des signaux ultrasonores secondaires, émettre par ondes hertziennes à destination des moyens de surveillance de surface, une requête en localisation de l'individu à la mer ainsi que des signaux représentatifs du moyen d'individualisation ;
- après réception de la requête, déclencher la mise en oeuvre par au moins l'un des moyens de surveillance de surface d'un procédé de signalisation et de localisation tel que précédemment exposé.

En d'autres termes, lorsqu'un obstacle ou une distance trop grande sépare le plongeur du moyen de surveillance de surface, tel qu'un bateau, ce dernier s'appuie sur un réseau de relais « réémetteurs » constitué par des moyens de surveillance de surface situés sur zone. Cela augmente les possibilités de localiser un plongeur isolé.

En pratique, le procédé ci-dessus comporte en outre les étapes itératives consistant :
- à localiser, à intervalles de temps réguliers ou non, l'individu à la mer en mettant en oeuvre un procédé tel que précédemment exposé, de façon à en relever la position ;
- à inférer en permanence la position de l'individu à la mer en fonction de ses positions précédemment relevées ;
- à interroger, à intervalles de temps réguliers ou non, et par ondes hertziennes chacun des moyens de surveillance de surface de manière à mémoriser leurs positionnements respectifs ;
- à classer les moyens de surveillance de surface dans l'ordre croissant de leurs distances respectives à la position inférée ;
- à émettre la requête par ondes hertziennes sur le canal de fréquence du moyen de surveillance de surface classé en premier ;
- après réception de la requête, à déclencher la mise en oeuvre par le moyen de surveillance de surface d'un procédé de signalisation et de localisation tel que précédemment exposé ;
- à réitérer les étapes précédentes en interrogeant les moyens de surveillance de surface dans l'ordre croissant de la distance jusqu'à localisation effective du individu à la mer.

Autrement dit, le réseau est utilisé de manière à optimiser les communications échangées entre moyens de surveillance de surface.

### BREVE DESCRIPTION DES FIGURES

L'invention apparaîtra plus clairement à la lumière de la description des modes de réalisation particuliers suivants, qui font référence aux figures. L'objet de l'invention ne se limite cependant pas à ces modes de réalisation particuliers et d'autres modes de réalisation de l'invention sont possibles.
La figure 1 est une représentation schématique du principe de fonctionnement du dispositif de localisation d'un homme à la mer conforme à l'invention.

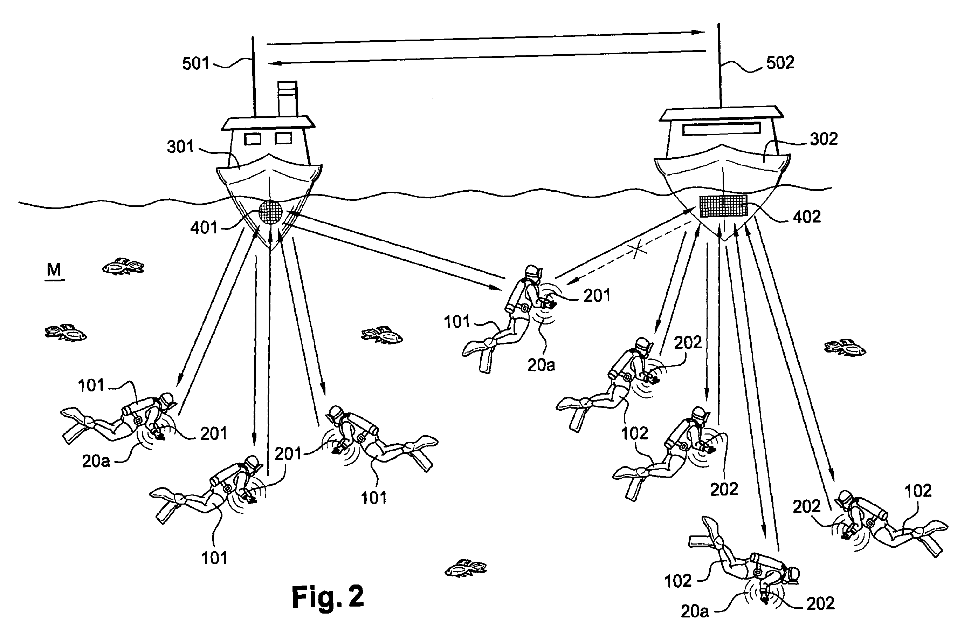

La figure 2 est une représentation schématique du principe de l'invention, dans le cadre plus particulier de plongeurs sous-marins.
La figure 3 est une représentation schématique d'une autre forme de réalisation de l'invention, également dans le cadre particulier de plongeurs sous-marins.
La figure 4 est une représentation schématique d'une forme de réalisation encore différente de l'invention.

### MODE DE REALISATION DE L'INVENTION

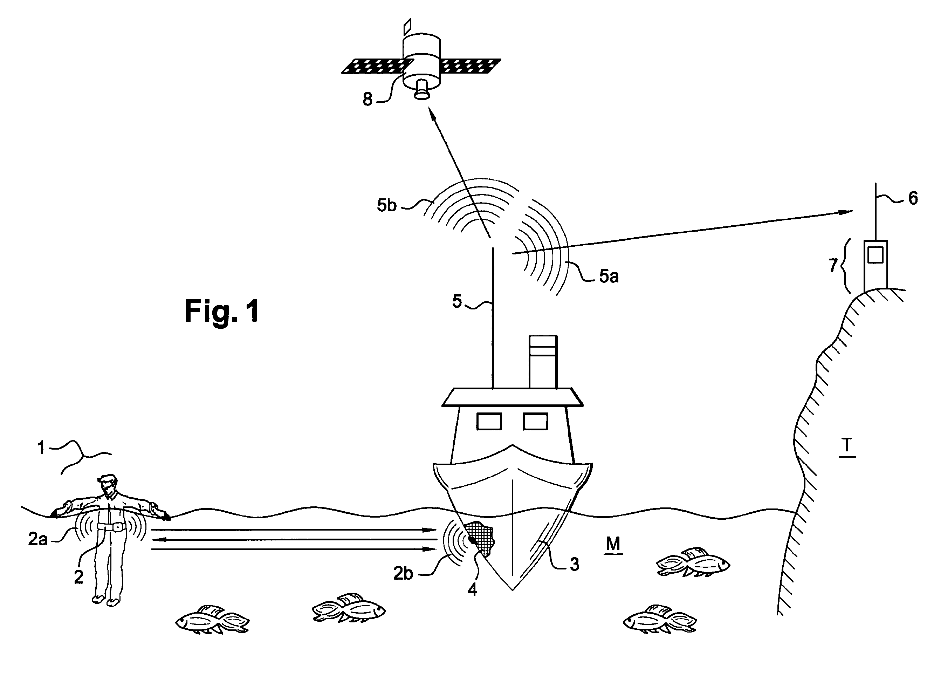

La figure 1 illustre l'utilisation du dispositif de signalisation objet de l'invention pour le sauvetage d'une personne (1) tombée à la mer d'un navire (3). La personne (1) est équipée d'un organe individuel d'alerte (2) intégrant un émetteur d'ondes ultrasonores, destiné à signaler sa détresse et à permettre sa localisation. Cet organe individuel d'alerte (2) peut se présenter sous la forme d'un bracelet, d'une ceinture, ou être intégré à un vêtement ou à un gilet de sauvetage, formant ainsi un objet peu encombrant, et en tout cas, insusceptible d'altérer la liberté des mouvements de son porteur.

En outre, l'organe individuel d'alerte (2) est équipé d'un boîtier étanche, logeant tout ou partie des composants électriques entrant dans sa constitution, ainsi que d'un accumulateur électrique, rechargeable ou non, pour permettre le fonctionnement dudit organe, et notamment, l'alimentation en énergie électrique d'un émetteur d'ondes ultrasonores, de fréquence spécifique comprise par exemple entre 30 et 60 kHz. Cet émetteur, notamment piézoélectrique, peut être intégré au boîtier, ou au contraire, être simplement relié à celui-ci au moyen d'un câble d'alimentation électrique. Cette dernière configuration peut s'avérer avantageuse dans le cas de l'homme à la mer, dans la mesure où ce faisant, l'émetteur piézoélectrique peut descendre plus profondément dans la mer, et donc corollairement, le cheminement des ondes ultrasonores dans le milieu liquide est moins perturbé par l'agitation de la mer à sa surface, générant, de manière connue, des phénomènes de cavitation. Typiquement, la longueur du câble est voisine de 1,5 mètre.

Conformément à l'invention, le boîtier constitutif de l'organe individuel d'alerte est équipé d'un contacteur humide (non représenté), qui déclenche automatiquement l'émission de signaux ultrasonores dits « primaires » (2a) lorsqu'il est plongé dans la mer. De manière connue, la résistance électrique du contacteur humide, lorsqu'il entre en contact avec l'eau, diminue et prend une valeur faible car les ions présents en milieu aqueux assurent la conduction entre ses deux bornes.

Cependant, le déclenchement du signal de détresse peut être opéré par d'autres organes automatiques ou manuels (interrupteur). Dans le cas d'un organe manuel de déclenchement, celui-ci peut être prévu irréversible pour éviter les risques d'interruption involontaire.

Selon une première étape, les signaux primaires sont émis par une source ou émetteur (non-représentée) d'émission ultrasonore équipant l'organe individuel d'alerte (2). Cette source d'émission est par exemple constituée d'un transducteur piézoélectrique apte à émettre de manière isotrope un signal préalablement généré par un microcontrôleur et amplifié. Aujourd'hui, on connaît de tels transducteurs aptes à émettre un signal perceptible à une distance d'environ 1,620 mille marin, soit environ 3 km. D'autres formes d'émission connues sont envisageables.

Ces signaux primaires sont destinés à être détectés par un moyen de surveillance de surface (3). Ce dernier peut être constitué par un navire, par exemple celui duquel l'homme est tombé, mais également par une bouée, par exemple larguée par un avion, dans les environs supposés de la chute de l'homme à la mer ou de la zone de progression de plongeurs sous-marins.

Ce moyen de surveillance de surface (3) est muni d'une antenne (4), apte à recevoir les signaux primaires ultrasonores (2a) de longueur d'onde spécifique émis par l'émetteur intégré ou associé à l'organe individuel d'alerte (2).

A cet effet, l'antenne (4) est nécessairement immergée, et donc par exemple positionnée au niveau de la quille du navire (3), ou au niveau de la zone immergée d'une bouée.

Selon une caractéristique de l'invention, pendant une phase initiale, l'émission des signaux primaires (2a) est opérée avec une puissance relativement faible. En effet, dans le cas où le moyen de surveillance de surface (3) est constitué par le navire (3) duquel est tombé le porteur (1) dudit émetteur, celui-ci est initialement proche du navire (3) en question. Cela permet de consommer le minimum d'énergie nécessaire à l'avertissement des secours embarqués sur le navire (3), et, partant, de maximaliser la durée d'émission primaire potentielle.

En revanche, les signaux primaires sont émis selon des séquences répétitives présentant des intervalles de repos de durée brève et irrégulière, afin de maximaliser les chances de réception d'un signal primaire (2a) par le moyen de surveillance de surface (3). La durée de la phase initiale est de l'ordre de quelques minutes.

La phase de repos dans une séquence d'émission est destinée à permettre à l'antenne logée dans l'organe individuel d'alerte (2) de capter un signal secondaire (2b), émis par le moyen de surveillance de surface (3). La phase de repos est nécessaire dans les cas où l'émetteur, de faible encombrement, doit assurer les fonctions d'émission et de réception. La durée de cette phase de repos est d'autant plus courte que la température de l'eau est faible, dans le but d'augmenter les chances de détection par le moyen de surveillance de surface (3), et donc corollairement d'optimiser les chances de récupérer le porteur de l'émetteur encore en vie. La mesure de la température de l'eau est réalisée, concomitamment à l'émission de signaux primaires (2a), au moyen d'une sonde de température logée dans l'organe individuel d'alerte (2).

De plus, la durée de repos des séquences répétitives est prévue variable, afin d'éviter la perturbation constituée par le rythme de la houle, et ainsi, de maximaliser la portée des signaux primaires émis (2a). Cependant, on pourrait prévoir des séquences d'émissions ultrasonores périodiques, sans sortir du cadre de cette invention.

Selon une deuxième étape, si le moyen de surveillance de surface (3) capte un signal primaire (2a), il émet automatiquement un signal secondaire (2b), à partir de moyens d'émission essentiellement déclenchés par la réception des signaux primaires (2a) par l'antenne immergée (4) et accessoirement déclenchés par un circuit de commutation approprié. Ensuite, suite à la détection du signal secondaire (2b), l'organe individuel d'alerte (2) répond automatiquement par l'émission d'un signal de réponse.

Ce signal ultrasonore de réponse émis par l'organe individuel d'alerte (2) est reçu par le moyen de surveillance de surface (3), qui comprend des moyens aptes à calculer la position de l'organe individuel d'alerte (2) en fonction de ces signaux ultrasonores reçus. A ce stade, l'organe individuel d'alerte n'a plus la main, l'émission des signaux qu'il génère alors étant constitué de pulses basiques, dont la finalité est de permettre la localisation du porteur de l'organe (2) en question.

Ainsi, si au bout d'un laps de temps déterminé, typiquement compris entre 30 secondes et une minute, l'organe individuel d'alerte ne reçoit plus les signaux secondaires (2b), matérialisant alors sa sortie de la zone de captage du moyen de surveillance de surface (3), ledit organe individuel d'alerte recouvre son autonomie, et ré-émet des signaux (2a) correspondant à son mode d'émission d'origine, c'est à dire conforme à sa propre procédure, jusqu'à ce qu'il capte à nouveau les signaux secondaires (2b).

En outre, et dans un souci de permettre un fonctionnement correct du dispositif de l'invention, la puissance des signaux primaires (2a) émis par l'organe individuel d'alerte (2) est avantageusement voisine de celle des signaux secondaires (2b) émis par le moyen de surveillance de surface (3), et ce, dans le souci de rester dans la zone de captage ou d'émissions des différents organes.

Selon une troisième étape, le moyen de surveillance de surface (3) peut localiser la personne (1) en termes de direction et de distance par rapport au navire (3), selon les principes connus de triangulation ou de radiogoniométrie, à l'aide des différents allers et retours entre les signaux émis et les signaux captés. A cet effet, le moyen de surveillance de surface (3) est muni de moyens aptes à calculer la distance et la direction, respectivement à partir de la durée de parcours des ondes ultrasonores dans l'eau et à partir de la différence d'intensité des signaux reçus au niveau de différentes surfaces de l'antenne immergée (4). En effet, l'antenne immergée (4) est constituée de plusieurs capteurs à ultrasons ou d'un capteur présentant une surface permettant la discrimination spatiale des signaux émis par l'émetteur de l'organe individuel d'alerte (2). Les moyens de calcul du positionnement incluent nécessairement un chronomètre. De plus, ils intègrent l'orientation indiquée par un compas de navigation et les coordonnées dans un système de positionnement global. Ainsi, ils déterminent la position de l'homme à la mer par rapport à ces coordonnées.

Lors d'une quatrième étape, le moyen de surveillance de surface (3), muni d'un organe d'émission (5) de signaux (5a, 5b) par ondes hertziennes, signale automatiquement les coordonnées de la personne (1) ainsi déterminées dans un système de positionnement global, tel que le GPS, à une organisation de sauvetage (7) située à terre (T). En pratique, la transmission d'un signal hertzien (5a, 5b) se déclenche après une temporisation déterminée, ici environ 30 secondes, durant laquelle le signal d'alerte peut être annulé au moyen d'un coupe-alerte, par exemple dans le cas où les secours embarqués sur le navire s'avéreraient suffisants pour sauver la personne (1).

Le calcul de position et les signaux hertziens indiquant celle-ci sont réitérés tant que l'homme à la mer n'est pas secouru ou tant qu'il est situé dans le champ de réception de l'antenne (4) du moyen de surveillance de surface (3), à savoir environ 1,620 mille nautique. En outre, quand il sort du champ de réception de l'antenne, les moyens de calcul sont aptes à extrapoler la dérive de l'homme à la mer à partir de ses positions calculées lorsqu'il était dans le champ de réception. L'extrapolation ainsi effectuée est forcément imprécise, mais l'indication qu'elle fournit peut s'avérer précieuse.

Bien évidemment, cette temporisation doit être très courte en relation avec la durée de survie d'un individu tombé à la mer.

Le coupe-alerte peut être réalisé de différentes manières. Ainsi, il peut s'agir d'un simple interrupteur situé sur l'organe individuel d'alerte (2), mais, pour éviter une interruption d'alerte involontaire par l'homme à la mer, il convient plutôt de prévoir de commander le coupe-alerte par l'organisation de sauvetage (7) ou par les membres d'équipage du navire (3).

Après la phase initiale, l'émission de signaux primaires (2a) est opérée avec une plus grande puissance, car les courants peuvent éloigner l'homme à la mer (1) du navire (3). Toutefois, toujours dans le but d'économiser au maximum l'énergie disponible pour l'émetteur de l'organe individuel d'alerte (2), les séquences d'émission de signaux primaires (2a) comportent des périodes de repos plus longues que celles de la phase initiale. En effet, après la fin de cette dernière, il est probable que le sauvetage sera opéré par des sauveteurs qui ne sont pas forcément sur zone. Durant leur phase d'approche, la personne (1) peut dériver et sa localisation doit donc être renouvelée moins fréquemment mais suffisamment longtemps, notamment pour permettre une extrapolation précise de sa position hors du champ de réception de l'antenne (4).

Par ailleurs, l'émission d'un signal hertzien peut être accompagnée de l'émission d'un signal sonore, lorsque le moyen de surveillance de surface est un navire (3). Cela permet d'alerter l'équipage et/ou les sauveteurs embarqués.

Avantageusement, le signal hertzien (5a, 5b) émis par le moyen de surveillance de surface (3, 4, 5) possède une longueur d'onde propre à être reçue par un système de positionnement global, tel que les systèmes GPS ou Galileo, incluant des satellites (8) de repérage. Par exemple, la longueur d'onde peut être de 406 MHz, afin d'émettre vers la constellation de satellites GEOSAR, et de 121,5 MHz ou 406 MHz pour émettre vers la constellation de satellites LEOSAR.

A son tour, le satellite (8) ayant capté le signal hertzien ré-émet vers l'organisation de sauvetage (7) équipée évidemment d'une antenne (6) adéquate. Néanmoins, le signal hertzien aussi peut être reçu directement par une organisation de sauvetage (7), voire par un autre moyen de surveillance de surface, pour le cas où celui-ci se trouverait à proximité de l'homme à la mer et en mesure de lui porter secours.

Par ailleurs, le format du signal hertzien peut être indifféremment l'un des formats numériques normalisés déjà connus, tels que le VHF DSC (*Very High Frequency Digital Selective Calling*), le BLU (Bande Latérale Unique) ou le GSM (*Global System for Mobile*). Les canaux d'émission peuvent également varier en fonction de la zone d'utilisation et/ou de l'organe individuel d'alerte mis en oeuvre. A noter que le format DSC convient particulièrement pour les applications de la présente invention aux systèmes d'alerte, car il est employé par le Système Mondial de Détresse et de Sécurité Maritime (SMDSM).

De manière optionnelle, l'organe individuel d'alerte (2) et/ou le moyen de surveillance de surface (3) et/ou le(s) récepteur(s) de signaux hertziens (satellite (8), poste de secours (7)) peuvent respectivement comporter une mémoire non-volatile, destinée à enregistrer les paramètres des signaux émis et reçus (notamment leur chronologie) par ondes ultrasonores et/ou hertziennes. Les mémoires non-volatiles jouent le rôle de « boîtes noires ». En outre, les mémoires peuvent intégrer un moyen d'individualisation dudit organe individuel d'alerte, permettant ainsi de connaître l'identification rapide de l'homme à la mer (1) et éventuellement de distinguer plusieurs signaux de détresse émis simultanément. Ce moyen d'individualisation peut cependant résulter du numéro de code traditionnellement attribué au circuit intégré recevant les différents composants des organes ou dispositifs en question.

Le moyen d'individualisation permet ainsi de vérifier que la personne secourue et hissée à bord est effectivement porteuse de l'émetteur (2) identifié par le moyen de surveillance de surface (3). Dans le cas contraire, cela signifie qu'il y a un autre homme à la mer (1). En pratique, la vérification se fait en rapprochant l'organe individuel d'alerte (2) du moyen de surveillance de surface (3), afin qu'ils entrent en contact radio et/ou proxy ; pour cela, l'organe individuel d'alerte (2) doit évidemment être muni d'un émetteur adéquat.

Le dispositif ou le procédé de signalisation conformes à la présente invention convient indifféremment aux professionnels de la mer (navires de pêcheurs, de marine marchande, plate-forme pétrolière, biologistes pistant des animaux...) qu'aux amateurs (véliplanchistes, plaisanciers, baigneurs...). Il peut bien évidemment trouver aussi son application sur un lac ou sur autre étendue d'eau. Dans la mesure où la localisation de l'homme à la mer n'est pas visuelle, le dispositif ou le procédé permet aussi de le repérer de jour comme de nuit.

Ainsi, le dispositif selon l'invention est peu encombrant, apte à émettre en immersion et rapide car automatique, puisque le signal de détresse (2a) est relayé sans intervention humaine jusqu'à l'organisation de sauvetage (7).

Par ailleurs, le dispositif ou le procédé selon l'invention trouve aussi son application pour la localisation de plongeurs sous marins, notamment appartenant à un même bateau ou à une même palanquée. En effet, il est souvent nécessaire à l'équipage de localiser précisément les plongeurs, car leur sortie de l'eau a rarement lieu à l'endroit de leur entrée, notamment du fait de la remontée dérivante, au cours de laquelle des courants peuvent déplacer les plongeurs, sur des distances pouvant être conséquentes, sans que ceux-ci ne s'en aperçoivent.

Pour permettre la localisation, chaque plongeur (101, 102) est équipé d'un émetteur, qui peut être intégré dans ou rapporté sur son ordinateur de plongée (201, 202) ou un vêtement. Le fonctionnement du dispositif ou le déroulement du procédé, en particulier relativement aux émissions et réceptions des signaux ultrasonores, est analogue à celui précédemment décrit.

En outre, de par l'intégration dudit émetteur au sein de l'ordinateur de plongée, on optimise le caractère interactif du dispositif entre les plongeur set le bateau auquel ils sont rattachés. Cette interactivité homme-machine peut même être renforcée au niveau dudit bateau, où une retranscription visuelle de différents paramètres et informations peut être envisagée.

L'adaptation à la plongée du dispositif et du procédé selon l'invention présente néanmoins des spécificités reflétant les différences entre les situations des personnes à localiser. Ainsi, l'émetteur de chaque plongeur (101, 102) peut-il en outre intégrer un appareil destiné à mesurer sa profondeur, lequel la transmet au microprocesseur générant des signaux ultrasonores (20a) de manière à la communiquer au moyen de surveillance de surface, en l'occurrence le navire (301, 302), qui est équipé d'une antenne appropriée (401, 402). On souligne en cela le caractère interactif du dispositif, particulièrement appréciable en relation avec l'activité de la plongée sous-marine.

De plus, pour localiser chaque plongeur, les moyens de surveillance de surface de ces navires (301, 302) sont équipés de moyens de calcul, tels que ceux précédemment décrits, aptes à déterminer, à partir des signaux reçus sur chaque antenne ultrasonore (401, 402), les coordonnées de chaque plongeur dans un système de positionnement global, comme le GPS. Ainsi, l'équipage du navire (301, 302) est en mesure de diriger le navire (301, 302) de manière à se trouver en permanence à une distance raisonnable du ou des plongeur(s) (101, 102). De la sorte, l'organisation et la sécurité des palanquées sont réalisées efficacement.

Les fréquences des signaux ultrasonores employées doivent être différentes de la fréquence de détresse utilisée dans l'application de l'invention au sauvetage. Cependant, chaque plongeur peut être équipé d'un organe individuel d'alerte distinct ou incorporé à son ordinateur de plongée (201, 202), ledit organe étant alors susceptible d'émettre sur la fréquence de détresse.

Les signaux (20a) correspondent aux signaux primaires (2a) évoqués précédemment. Ils peuvent présenter des fréquences spécifiques à chaque navire (301, 302) voire à chaque plongeur. De manière avantageuse, chaque émetteur comporte un moyen d'individualisation tel que précédemment évoqué, pour distinguer les plongeurs les uns des autres ou, du moins, chaque numéro qui caractérise leur émetteur. Il est alors nécessaire de prévoir une phase de reconnaissance sur le pont du navire (301, 302), sous la forme d'un signal par onde hertzienne par exemple, transmettant le numéro de chaque émetteur au moyen de surveillance de surface.

Dès l'immersion, le moyen de surveillance de surface embarqué sur le navire (301, 302) reçoit des signaux ultrasonores qui coïncident avec ceux reçus pendant la phase de reconnaissance.

De son côté, le moyen de surveillance de surface embarqué sur le navire (301, 302) peut transmettre des informations, notamment de localisation, à chaque plongeur via un émetteur ultrasonore. Les ordinateurs individuels de plongée (201, 202) permettent l'affichage de ces informations par l'intermédiaire d'une interface homme-machine, telle qu'un écran.

L'émetteur d'ondes hertziennes (501, 502) du navire (301, 302) permet quant à lui d'échanger les positions de plongeurs appartenant à des palanquées différentes de plusieurs navires proches (301, 302), et, partant, d'assurer la sécurité de ces plongeurs (101, 102).

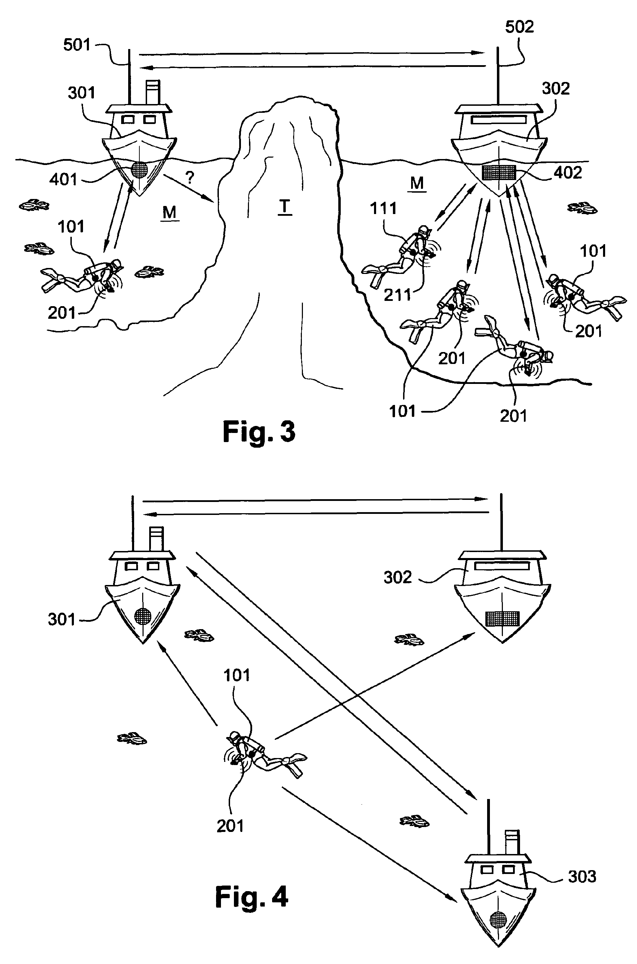

Par ailleurs, la figure 3 illustre une autre de forme de réalisation de l'invention. Selon celle-ci, il est possible de localiser des plongeurs sous-marins (111) depuis un moyen de surveillance de surface tel qu'un bateau (301), malgré un éloignement excessif ou malgré la présence d'obstacles, tels qu'un rocher (T), empêchant la propagation des signaux ultrasonores. En effet, dans ce cas, les moyens d'émission de signaux ultrasonores secondaires (2b) du bateau (301) émettent régulièrement des demandes d'émission à l'attention des ordinateurs individuels de plongée (211) dans le but de déterminer la position des plongeurs (101, 111). Cependant, en présence d'un obstacle (T), l'ordinateur individuel d'un plongeur isolé (111) ne recevra pas les ultrasons porteurs d'une telle demande ou interrogation et, par conséquent, n'y répondra pas, si bien que les moyens de calcul du bateau (301) ne pourront par positionner ce plongeur (111).

En effet, les ultrasons ne peuvent se propager à travers un obstacle solide sauf lorsque l'émetteur est en contact avec cet obstacle et émet à une fréquence appropriée. Ces deux conditions ne pouvant être remplies dans la forme de réalisation illustrée par la figure 3, le bateau (301) n'est normalement pas en mesure de localiser un plongeur (111) appartenant à sa palanquée et isolé par un tel obstacle (T) ou par son éloignement.

Cependant, dans cette forme de réalisation de l'invention, il demeure possible de localiser le plongeur isolé (111). Pour procéder à cette localisation, le moyen de surveillance de surface (301) recourt à l'aide d'un réseau de moyens de surveillance de surface, tels que le bateau (302), qui se trouvent « sur zone », c'est-à-dire à proximité du ou des plongeur(s) isolé(s) (111). Ce « réseau » de moyens de surveillance peut ainsi aider le moyen de surveillance (301) à localiser un ou des plongeur(s) isolé(s) (111).

Au préalable, le bateau (301) doit identifier, par communication, tous les moyens de surveillance de surface (302) se trouvant « sur zone » et conséquemment qualifiés de « compatibles ». Il enregistre alors les coordonnées de ces moyens de surveillance compatibles (302), puis réactualise ces coordonnées à intervalles de temps réguliers.

Lorsque l'un des plongeurs (111) équipé d'un organe individuel (211) se retrouve isolé soit par l'obstacle (T), soit en raison d'un éloignement supérieur à la portée des communications par ultrasons, le bateau (301) ne reçoit plus de signaux ultrasonores caractéristiques de l'invention émis en réponse à ses signaux ultrasonores interrogatoires. En effet, l'appareil individuel (211) du plongeur isolé (111) n'émet pas de signal, car il ne peut plus recevoir les interrogations du bateau (301). Après un nombre donné d'échecs lors des tentatives d'interrogation, le bateau (301) passe en mode de localisation par le « réseau » des moyens de surveillance (302) compatibles.

Ainsi, dans le but de localiser le plongeur isolé (111), le bateau (301) détermine quel est le moyen de surveillance de surface (302) le plus proche du plongeur isolé (111) à partir des coordonnées, préalablement enregistrées et réactualisées, de chacun des moyens de surveillance compatibles (302) constituant ledit réseau.

Puis, il émet à l'intention du moyen de surveillance (302) ainsi déterminé une demande d'interrogation de l'appareil individuel (211) du plongeur isolé (111). Pour cela, le bateau (301) communique le numéro d'identification propre à cet appareil individuel (211) ainsi que l'identifiant du moyen de surveillance de surface (301) à l'origine de la demande de localisation (son propre identifiant, en l'occurrence), le canal de fréquence à utiliser pour la communication etc.

Comme il a connaissance du numéro d'identification de l'appareil individuel (211) du plongeur isolé (111), le bateau-relais (302) est apte, lors d'une interrogation, à le discerner des autres appareils individuels (201) et donc à localiser le plongeur isolé (111). Il peut alors calculer la position de ce plongeur (111) en déterminant ses coordonnées dans un système de positionnement global, puis communiquer ces coordonnées par ondes hertziennes au bateau interrogateur (301). Le moyen de surveillance de surface (302) compatible joue ainsi le rôle de relais pour le bateau interrogateur (301), car il relaye l'interrogation de ce dernier.

Le bateau interrogateur (301) est ainsi en mesure de localiser un ou des plongeur(s) isolé(s) (111) malgré son(leur) éloignement excessif ou malgré la présence d'obstacles. Bien entendu, le bateau (301) peut en outre et de la même manière échanger d'autres informations avec l'appareil individuel (211) du ou des plongeur(s) isolé(s) (111). Il peut en particulier signaler sa condition d'isolement au plongeur (111).

En outre, le protocole d'interrogation « en réseau » peut prévoir des interrogations supplémentaires dans le cas où le premier moyen de surveillance de surface (302) compatible ne parvient pas à localiser le plongeur isolé (111). Dans un tel cas, le bateau interrogateur (301) et/ou son relais (302) peuvent requérir une interrogation par un deuxième, un troisième etc, moyen de surveillance de surface compatible, jusqu'à connaître les coordonnées du plongeur isolé.

Ainsi, ce protocole d'interrogation en réseau comprend différentes étapes.

Tout d'abord, il consiste à constituer un réseau composé d'une pluralité de moyens de surveillance de surface (302), chacun desdits moyens étant apte à mettre en oeuvre un procédé conforme à l'invention pour la signalisation et de localisation d'un individu à la mer (111) équipé d'un organe individuel (211) intégrant un moyen d'individualisation.

En cas d'absence prolongée de réception des signaux ultrasonores qui, en l'absence de l'obstacle, auraient dus être émis par l'organe individuel (211) en réponse à des signaux ultrasonores secondaires, le bateau (301) émet par ondes hertziennes à destination des moyens de surveillance de surface (302) une requête en localisation de l'individu à la mer (111) ainsi que des signaux représentatifs du moyen d'individualisation.

Après réception de la requête, on déclenche la mise en oeuvre par au moins l'un des moyens de surveillance de surface (302) d'un procédé, conforme à l'invention, de signalisation et de localisation.

Plus particulièrement, ce protocole comporte les étapes itératives suivantes :

On localise, à intervalles de temps réguliers ou non, l'individu à la mer(111) en mettant en oeuvre un procédé conforme à l'invention de signalisation et de localisation, de façon à en relever la position.

On infère en permanence la position de l'individu à la mer (111) en fonction de ses positions précédemment relevées.

On interroge à intervalles de temps réguliers ou non et par ondes hertziennes chacun des moyens de surveillance de surface (302) de manière à mémoriser leurs positionnements respectifs.

On classe les moyens de surveillance de surface (302) dans l'ordre croissant de leurs distances respectives par rapport à la position inférée.

On émet la requête par ondes hertziennes sur le canal de fréquence du moyen de surveillance de surface (302) classé en premier.

Après réception de la requête, on déclenche la mise en oeuvre par le moyen de surveillance de surface (302) d'un procédé de signalisation et de localisation conforme à l'invention.

On réitère les étapes précédentes en interrogeant les moyens de surveillance de surface dans l'ordre croissant de la distance jusqu'à localisation effective du individu à la mer.

Par ailleurs, ce fonctionnement « en réseau » permet également la réalisation d'une autre forme de réalisation de l'invention, illustrée par la figure 4, dans laquelle le bateau interrogateur (301) requiert l'aide d'au moins deux moyens de surveillance de surface compatibles (302, 303) afin de localiser avec précision par triangulation un individu à la mer ou un plongeur en détresse (101). La communication entre moyens de surveillance de surface se fait de la même manière que dans la forme de réalisation précédemment décrite. En effet, pour des raisons de sécurité, l'appareil individuel (201) est équipé d'un organe de mesure de profondeur, ou profondimètre, et il peut donc communiquer sa profondeur bateau (301). Ainsi, lorsque chacun des trois moyens de surveillance de surface (301-303) a communiqué sa position en coordonnées GPS et la distance qui le sépare de l'appareil individuel (201), le bateau interrogateur (301) peut déterminer avec précision la position de l'appareil individuel (201).

En effet, la distance et la profondeur de l'appareil individuel (201) étant connues, l'angle de la position du plongeur (101) par rapport au bateau est bien défini. Cette position est alors déterminée par les distances, respectivement mesurées par deux bateaux supplémentaires (302, 303), qui les séparent du plongeur (101).

En d'autres termes, la position du plongeur est située à l'intersection de trois cercles formés par les intersections du plan horizontal situé à la profondeur du plongeur (101) respectivement avec chacune des trois sphères centrées au niveau de la mer à l'emplacement de chacun des trois bateaux (301-303), et dont les rayons respectifs valent les distances mesurées respectivement par chacun des trois moyens de surveillance de surface (301-303).

## Revendications

1. Dispositif de signalisation et de localisation d'un individu à la mer (1), comprenant :
• un émetteur - récepteur d'ondes ultrasonores, constituant un organe individuel d'alerte (2), porté par l'individu à la mer (1) ou susceptible d'y tomber, destiné à émettre de manière isotrope des ondes porteuses de signaux primaires (2a) et à capter des signaux secondaires (2b) ;
• un moyen de surveillance de surface (3), positionné sur la surface de la mer, et muni :
- d'une antenne immergée (4), apte à capter les signaux primaires (2a) émis par l'organe individuel d'alerte (2) ;
- de moyens d'émission de signaux ultrasonores secondaires (2b), ces moyens d'émission étant déclenchés essentiellement par la réception par l'antenne immergée (4) des signaux primaires (2a) ;
- de moyens aptes à calculer la position de l'organe individuel d'alerte (2) en fonction de signaux ultrasonores émis par l'organe individuel d'alerte (2) en réponse aux signaux ultrasonores secondaires (2b), et à convertir ces informations en coordonnées d'un système de positionnement global, tel que le GPS ;
- d'un organe d'émission par ondes hertziennes (5) apte à émettre des signaux représentatifs de ces coordonnées au niveau d'un poste de traitement de l'alerte mobile ou immobile (7, 8), et muni d'un récepteur hertzien (6).

2. Dispositif de signalisation et de localisation d'un individu à la mer (1) selon la revendication 1, ***caractérisé* en ce que** l'antenne (4), dont est muni le moyen de surveillance de surface (3), est multiple ou présente une surface déterminée.

3. Dispositif de signalisation et de localisation d'un individu à la mer (1) selon l'une des revendications 1 et 2, ***caractérisé* en ce que** l'organe individuel d'alerte (2) est muni :
• de moyens de déclenchement automatique ou manuel de l'émission des signaux ultrasonores primaires (2a) ;
• de moyens de déclenchement automatique de signaux ultrasonores en réponse aux signaux secondaires (2b) émis par le moyen de surveillance de surface (3).

4. Dispositif de signalisation et de localisation d'un individu à la mer (1) selon la revendication 3, ***caractérisé* en ce que** les moyens de déclenchement automatique de l'émission ultrasonore comprennent un système apte à détecter l'état d'immersion d'au moins une zone de l'organe individuel d'alerte (2), tel qu'un contacteur humide.

5. Dispositif de signalisation et de localisation d'un individu à la mer (1) selon l'une des revendications 1 à 4, ***caractérisé* en ce que** l'organe individuel d'alerte (2) comprend :
• une source d'alimentation électrique autonome, rechargeable ou non ;
• une source d'émissions d'ondes ultrasonores ;
• un organe de mesure de profondeur ;
• un microprocesseur ;
• une sonde de température apte à mesurer la température de l'eau et à la communiquer au microprocesseur ;
• une mémoire non-volatile, destinée à enregistrer les paramètres des signaux émis et reçus.

6. Dispositif de signalisation et de localisation d'un individu à la mer (1) selon la revendication 5, ***caractérisé* en ce que** la mémoire non-volatile comprend en outre un moyen d'individualisation dudit organe.

7. Dispositif de signalisation et de localisation d'un individu à la mer (1) selon l'une des revendications 1 à 6, ***caractérisé* en ce que** le moyen de surveillance de surface (3) est solidaire d'une bouée ou d'un bâtiment de surface, typiquement un bateau, présentant une partie immergée logeant la ou les antennes (4) d'émission et de captation des ondes ultrasonores, et une partie émergée logeant les organes d'émission par voie hertzienne (5).

8. Procédé de signalisation et de localisation d'un individu à la mer (1), consistant :
• à induire volontairement ou automatiquement, en fonction des circonstances, l'activation d'un organe individuel d'alerte (2) porté par un individu présent dans la mer (1), de telle sorte à engendrer l'émission isotrope de signaux primaires (2a) par ondes ultrasonores ;
• à capter lesdits signaux primaires (2a) et à induire en retour des signaux ultrasonores secondaires (2b), ces derniers étant captés par ledit organe individuel d'alerte (2) afin de déclencher automatiquement en réponse l'émission de signaux ultrasonores, de telle sorte à permettre la localisation de l'individu à la mer (1), porteur de l'organe individuel d'alerte (2) - émetteur desdits signaux primaires (2a) ;
• à traiter les signaux ultrasonores émis par l'organe individuel d'alerte (2) en réponse aux signaux ultrasonores secondaires (2b) pour déterminer en coordonnées d'un système de positionnement global, tel que le GPS, la position de l'individu à la mer (1) ;
• à émettre des signaux représentatifs de ces coordonnées par ondes hertziennes de manière à indiquer la localisation de l'individu à la mer (1), et le cas échéant, déclencher les opérations de secours ad hoc.

9. Procédé de signalisation et de localisation d'un individu à la mer (1) selon la revendication 8, ***caractérisé* en ce que** l'émission de signaux primaires (2a) comprend deux phases successives :
• une première phase commençant immédiatement après l'activation de l'organe individuel d'alerte, au cours de laquelle les signaux primaires (2a) émis sont de puissance d'émission faible, et sont cadencés à intervalles réguliers ou non selon des séquences répétitives de faible période et de durée déterminée ;
• une seconde phase consécutive à ladite première phase, au cours de laquelle les signaux primaires (2a) sont de puissance d'émission plus importante et sont cadencés à intervalles réguliers ou non selon des séquences répétitives de période plus longue.

10. Procédé de signalisation et de localisation d'un individu à la mer (1) selon l'une des revendications 8 et 9, ***caractérisé* en ce que** l'activation de l'organe d'activation induit le déclenchement d'une étape préalable consistant à mesurer la température de l'eau dans laquelle est situé l'individu à la mer (1), et ce au moyen d'une sonde de température logée dans ledit organe individuel d'alerte (2), cette étape pouvant être réalisée concomitamment avec le déclenchement de l'émission des signaux primaires (2a).

11. Procédé de signalisation et de localisation d'un individu à la mer (1) selon la revendication 10, ***caractérisé* en ce que** des intervalles de repos sont ménagés entre deux périodes d'émission de signaux primaires (2a), la durée desdits intervalles de repos étant fonction de la température de l'eau mesurée par la sonde.

12. Procédé de signalisation et de localisation d'un individu à la mer (1) selon l'une des revendications 8 à 11, ***caractérisé* en ce que** le déclenchement de l'émission desdits signaux primaires (2a) est réalisé de manière automatique ou résulte d'un acte positif de l'individu à la mer (1).

13. Procédé de signalisation et de localisation d'un individu à la mer (111), ***caractérisé* en ce qu'**il comprend les étapes suivantes :
• former un réseau composé d'une pluralité de moyens de surveillance de surface (302), chacun desdits moyens (302) étant apte à mettre en oeuvre un procédé selon l'une des revendications 8 à 12 de signalisation et de localisation d'un individu à la mer (111) équipé d'un organe individuel (211) intégrant un moyen d'individualisation ;
• en cas d'absence prolongée de réception desdits signaux ultrasonores émis par ledit organe individuel (211) en réponse à des signaux ultrasonores secondaires, émettre par ondes hertziennes à destination desdits moyens de surveillance de surface (302), une requête en localisation de l'individu à la mer (111) ainsi que des signaux représentatifs dudit moyen d'individualisation ;
• après réception de ladite requête, déclencher la mise en oeuvre par au moins l'un desdits moyens de surveillance de surface (302) d'un procédé de signalisation et de localisation selon l'une des revendications 8 à 12.

14. Procédé de signalisation et de localisation d'un individu à la mer (1) selon la revendication 13, ***caractérisé* en ce qu'**il comporte en outre les étapes itératives consistant :
• à localiser, à intervalles de temps réguliers ou non, l'individu à la mer (111) en mettant en oeuvre un procédé selon l'une des revendications 8 à 12, de façon à en relever la position ;
• à inférer en permanence la position de l'individu à la mer (111) en fonction de ses positions précédemment relevées ;
• à interroger, à intervalles de temps réguliers ou non, et par ondes hertziennes chacun desdits moyens de surveillance de surface (302) de manière à mémoriser leurs positionnements respectifs ;
• à classer lesdits moyens de surveillance de surface (302) dans l'ordre croissant de leurs distances respectives à ladite position inférée ;
• à émettre ladite requête par ondes hertziennes sur le canal de fréquence du moyen de surveillance de surface (302) classé en premier ;
• après réception de ladite requête, à déclencher la mise en oeuvre par ledit moyen de surveillance de surface (302) d'un procédé de signalisation et de localisation selon l'une des revendications 8 à 12 ;
• à réitérer les étapes précédentes en interrogeant les moyens de surveillance de surface dans l'ordre croissant de ladite distance jusqu'à localisation effective dudit individu à la mer (111).

## Claims

1. A signalling and localisation device for an individual in the sea (1), comprising:
an ultrasonic wave transceiver constituting an individual alarm unit (2) carried by the individual in the sea (1), or likely to fall into the sea, designed to produce isotropic radiation of carrier waves of primary signals (2a) and to pick up secondary signals (2b);
a surface surveillance means (3) arranged on the surface of the sea and provided with:
- a submersed antenna (4) capable of picking up the primary signals (2a) transmitted by individual alarm unit (2);
- means of transmitting secondary ultrasonic signals (2b), this means of transmission being triggered essentially by submersed antenna (4) receiving primary signals (2a);
- means capable of calculating the position of individual alarm unit (2) as a function of the ultrasonic signals transmitted by individual alarm unit (2) in response to secondary ultrasonic signals (2b), and of converting this information into coordinates of a global positioning system, such as GPS;
- a unit for transmitting radio waves (5) capable of sending signals representing these coordinates to a mobile or fixed alarm processing center (7, 8) equipped with a radio receiver.

2. A signalling and localisation device for an individual in the sea (1) as claimed in claim 1, **characterized in that** the antenna (4) with which surface surveillance means (3) is equipped is a multiple antenna or has a specific surface area.

3. A signalling and localisation device for an individual in the sea (1) as claimed in any of claims 1 or 2, **characterized in that** the individual alarm unit (2) is equipped with:
means of automatically or manually triggering the transmission of primary ultrasonic signals (2a);
means of automatically triggering ultrasonic signals in response to the secondary signals (2b) transmitted by surface surveillance means (3).

4. A signalling and localisation device for an individual in the sea (1) as claimed in claim 3, **characterized in that** the means of automatically triggering ultrasonic transmission comprises a system capable of detecting the immersion state of at least one area of individual alarm unit (2) such as a wet switch.

5. A signalling and localisation device for an individual in the sea (1) as claimed in any of claims 1 to 4, **characterized in that** the individual alarm unit (2) comprises:
a self-contained rechargeable or non-rechargeable electric power source;
an ultrasonic wave emission source;
a depth measuring unit;
a microprocessor;
a temperature sensor capable of measuring the temperature of the water and reporting it to the microprocessor;
a non-volatile memory designed to record parameters of the transmitted and received signals.

6. A signalling and localisation device for an individual in the sea (1) as claimed in claim 5, **characterized in that** the non-volatile memory further comprises means of personalising said unit.

7. A signalling and localisation device for an individual in the sea (1) as claimed in any of claims 1 to 6, **characterized in that** the surface surveillance means (3) is attached to a buoy or a surface vessel, typically a boat, and has a submerged part which accommodates the antenna(s) (4) that transmit(s) and receive(s) ultrasonic waves and a nonsubmerged part which accommodates the means of radio transmission (5).

8. A signalling and localisation method for an individual in the sea (1), comprising:
deliberately or automatically, depending on prevailing circumstances, causing activation of an individual alarm unit (2) carried by a individual who is in the sea (1) so as to trigger isotropic transmission of primary signals (2a) using ultrasonic waves;
picking up said primary signals (2a) and, in return, producing secondary ultrasonic signals (2b), wherein said signals (2b) are picked up by said individual alarm unit (2) in order to automatically trigger, in response, the transmission of ultrasonic signals so as to enable localisation of the individual in the sea (1) carrying the individual alarm unit (2) which transmits said primary signals (2a);
processing the ultrasonic signals transmitted by the individual alarm unit (2) in response to secondary ultrasonic signals (2b) in order to determine the position of the individual in the sea (1) as coordinates of a global positioning system, such as GPS;
transmitting signals that represent these coordinates by radio so as to indicate the location of the individual in the sea (1) and, if applicable, trigger ad hoc search and rescue operations.

9. A signalling and localisation method for an individual in the sea (1) as claimed in claim 8, **characterized in that** the transmission of primary signals (2a) comprises two successive phases:
a first phase which starts immediately after activation of the individual alarm unit during which primary signals (2a) are transmitted at low power and are timed at regular or irregular intervals in repetitive sequences having a short period and specific duration;
a second phase subsequent to said first phase during which primary signals (2a) are transmitted at higher power and are timed at regular or irregular intervals in repetitive sequences having a longer period.

10. A signalling and localisation method for an individual in the sea (1) as claimed in any of claims 8 or 9, **characterized in that** activating the individual alarm unit causes triggering of a prior stage which involves measuring the temperature of the water in which the individual in the sea (1) is immersed by means of a temperature sensor housed in said individual alarm unit (2), this stage possibly being performed at the same time as triggering the transmission of primary signals (2a).

11. A signalling and localisation method for an individual in the sea (1) as claimed in claim 10, **characterized in that** there are idle intervals between two periods when primary signals (2a) are transmitted, the duration of said idle intervals depending on the water temperature measured by the sensor.

12. A signalling and localisation method for an individual in the sea (1) as claimed in any of claims 8 to 11, **characterized in that** the transmission of said primary signals (2a) is triggered automatically or as a result of positive action by the individual in the sea (1).

13. A signalling and localisation method for an individual in the sea (111) **characterized in that** it comprises following steps:
establishing a network comprising a plurality of surface surveillance means (302), each of said means (302) being capable of using a signalling and localisation method, as claimed in any of claims 8 to 12, for an individual in the sea (111) equipped with individual unit (211) which includes means of personalisation;
in the event of failure to receive, for a prolonged period, ultrasonic signals transmitted by individual unit (211) in response to secondary ultrasonic signals, transmitting, by radio, a request to locate the individual in the sea (111) as well as representative signals from said means of personalisation to said surface surveillance means (302);
after receiving said request, triggering the use, by at least one of said surface surveillance means (302), of a signalling and localisation method as claimed in any of claims 8 to 12.

14. A signalling and localisation method for an individual in the sea (111), as claimed in claim 13, **characterized in that** it further comprises the iterative steps comprising:
locating, at regular or irregular time intervals, an individual in the sea (111) by using a method as claimed in any of claims 8 to 12 in order to plot its position;
continuously deducing the position of the individual in the sea (111) as a function of their previously plotted positions;
interrogating, at regular or irregular time intervals and by radio, each of said surface surveillance means (302) so as to store their respective positioning;
classifying said surface surveillance means (302) in ascending order of their respective distance from the deduced position;
transmitting said request by radio on the frequency channel of surface surveillance means (302) ranked in first position;
after receiving said request, triggering the use, by said surface surveillance means (302), of a signalling and localisation method as claimed in any of claims 8 to 12;
reiterating the above steps by interrogating the surface surveillance means in ascending order of said distance until the individual in the sea (111) is effectively located.

## Patentansprüche

1. Vorrichtung zum Melden und Orten einer über Bord gegangenen Person (1), umfassend:
ein Ultraschallwellen-Sende-Empfangsgerät, das ein persönliches Warnelement (2) bildet, das von der über Bord gegangenen oder zu gehen drohenden Person (1) getragen wird, das dazu gedacht ist, isotrop Trägerwellen von Primärsignalen (2a) zu senden und Sekundärsignale (2b) zu empfangen;
ein Überwachungsmittel an der Oberfläche (3), das an der Meeresoberfläche angeordnet wird und ausgestattet ist mit:
- einer untertauchenden Antenne (4), die dazu geeignet ist, die Primärsignale (2a) zu empfangen, die von dem persönlichen Warnelement (2) gesendet werden;
- Mitteln zum Senden von sekundären Ultraschallsignalen (2b), wobei diese Sendemittel im Wesentlichen **dadurch** ausgelöst werden, dass die untertauchende Antenne (4) die Primärsignale (2a) empfängt;
- Mitteln, die geeignet sind, um die Position des persönlichen Warnelements (2) je nach den Ultraschallsignalen, die von dem persönlichen Warnelement (2) als Antwort auf die sekundären Ultraschallsignale (2b) gesendet werden, zu berechnen und um diese Informationen in Koordinaten eines globalen Positionsbestimmungssystems, wie etwa GPS, umzusetzen;
- einem Element (5) zum Senden über Radiowellen, das dazu geeignet ist, Signale, die diese Koordinaten darstellen, an einer beweglichen oder unbeweglichen Warnungsverarbeitungsstelle (7, 8) zu senden, die mit einem Funkempfänger (6) ausgestattet ist.

2. Vorrichtung zum Melden und Orten einer über Bord gegangenen Person (1) nach Anspruch 1, **dadurch gekennzeichnet, dass** die Antenne (4), mit denen das Überwachungsmittel an der Oberfläche (3) ausgestattet ist, mehrteilig ist und eine bestimmte Oberfläche aufweist.

3. Vorrichtung zum Melden und Orten einer über Bord gegangenen Person (1) nach Anspruch 1 und 2, **dadurch gekennzeichnet, dass** das persönliche Warnelement (2) ausgestattet ist mit:
Mitteln zum automatischen oder manuellen Auslösen des Sendens der primären Ultraschallsignale (2a);
Mitteln zum automatischen Auslösen von Ultraschallsignalen als Antwort auf Sekundärsignale (2b), die von dem Überwachungsmittel an der Oberfläche (3) gesendet werden.

4. Vorrichtung zum Melden und Orten einer über Bord gegangenen Person (1) nach Anspruch 3, **dadurch gekennzeichnet, dass** die Mittel zum automatischen Auslösen der Ultraschallsendung ein System umfassen, das dazu geeignet ist, den Untertauchzustand mindestens eines Bereichs des persönlichen Warnelements (2) zu erfassen, wie z.B. einen Feuchtschalter.

5. Vorrichtung zum Melden und Orten einer über Bord gegangenen Person (1) nach einem der Ansprüche 1 bis 4, **dadurch gekennzeichnet, dass** das persönliche Warnelement (2) folgendes umfasst:
eine aufladbare oder nicht aufladbare selbstständige Stromversorgungsquelle;
eine Ultraschallwellen-Sendequelle;
ein Tiefenmesselement;
einen Mikroprozessor;
eine Temperatursonde, die dazu geeignet ist, die Temperatur des Wassers zu messen und sie dem Mikroprozessor mitzuteilen;
einen nicht flüchtigen Speicher, der dazu gedacht ist, die Parameter der gesendeten und empfangenen Signale zu speichern.

6. Vorrichtung zum Melden und Orten einer über Bord gegangenen Person (1) nach Anspruch 5, **dadurch gekennzeichnet, dass** der nicht flüchtige Speicher außerdem ein Mittel zur persönlichen Anpassung des Elements umfasst.

7. Vorrichtung zum Melden und Orten einer über Bord gegangenen Person (1) nach einem der Ansprüche 1 bis 6, **dadurch gekennzeichnet, dass** das Überwachungsmittel an der Oberfläche (3) mit einer Boje oder einem Wasserfahrzeug an der Oberfläche, typischerweise einem Schiff, fest verbunden ist, die bzw. das einen untertauchenden Teil, der die Antenne(n) (4) zum Senden und Empfangen der Ultraschallwellen aufnimmt, und einen auftauchenden Teil, der die Elemente (5) zum Senden über einen Funkübertragungskanal aufnimmt, aufweist.

8. Verfahren zum Melden und Orten einer über Bord gegangenen Person (1), bestehend aus folgenden Schritten:
umstandsgemäßes absichtliches oder automatisches Herbeiführen der Aktivierung eines persönlichen Warnelements (2), das von einer sich im Meer befindlichen Person (1) getragen wird, um das isotrope Senden von Primärsignalen (2a) über Ultraschallwellen zu bewirken;
Empfangen der Primärsignale (2a) und als Antwort Herbeiführen von sekundären Ultraschallsignalen (2b), wobei letztere von dem persönlichen Warnelement (2) empfangen werden, um automatisch als Antwort das Senden von Ultraschallsignalen auszulösen, um das Orten der über Bord gegangenen Person (1) zu ermöglichen, die das persönliche Warnelement (2) trägt, das die Primärsignale (2a) sendet;
Verarbeiten der Ultraschallsignale, die von dem persönlichen Warnelement(2) als Antwort auf die sekundären Ultraschallsignale (2b) ausgesendet werden, um als Koordinaten eines globalen Positionsbestimmungssystems, wie etwa GPS, die Position der über Bord gegangenen Person (1) zu bestimmen;
Senden von Signalen, die diesen Koordinaten entsprechen, über Radiowellen, um den Standort der über Bord gegangenen Person (1) anzugeben, und gegebenenfalls die passenden Rettungsaktionen auszulösen.

9. Verfahren zum Melden und Orten einer über Bord gegangenen Person (1) nach Anspruch 8, **dadurch gekennzeichnet, dass** das Senden von Primärsignalen (2a) zwei aufeinander folgende Phasen umfasst:
eine erste Phase, die unmittelbar nach der Aktivierung des persönlichen Warnelements beginnt, während der die gesendeten Primärsignale (2a) eine schwache Sendeleistung haben und in regelmäßigen oder unregelmäßigen Abständen getaktet werden, je nach den sich wiederholenden Sequenzen mit schwacher Periode und bestimmter Dauer;
eine zweite Phase, die auf die erste Phase folgt, während der die Primärsignale (2a) eine größere Sendeleistung haben und in regelmäßigen oder unregelmäßigen Abständen getaktet werden, je nach den sich wiederholenden Sequenzen mit längerer Periode.

10. Verfahren zum Melden und Orten einer über Bord gegangenen Person (1) nach einem der Ansprüche 8 und 9, **dadurch gekennzeichnet, dass** die Aktivierung des Warnelement das Auslösen eines vorläufigen Schritts herbeiführt, der darin besteht, die Temperatur des Wassers zu messen, in dem sich die über Bord gegangene Person (1) befindet, und zwar mittels einer Temperatursonde, die in dem persönlichen Warnelement (2) aufgenommen ist, wobei dieser Schritt gleichzeitig mit dem Auslösen des Sendens der Primärsignale (2a) erfolgen kann.

11. Verfahren zum Melden und Orten einer über Bord gegangenen Person (1) nach Anspruch 10, **dadurch gekennzeichnet, dass** zwischen zwei Primärsignal-Sendeperioden (2a) Ruheintervalle eingerichtet sind, wobei die Dauer dieser Ruheintervalle von der durch die Sonde gemessene Wassertemperatur abhängig ist.

12. Verfahren zum Melden und Orten einer über Bord gegangenen Person (1) nach einem der Ansprüche 8 bis 11, **dadurch gekennzeichnet, dass** das Auslösen des Sendens der Primärsignale (2a) automatisch erfolgt oder sich aus einer direkten Handlung der über Bord gegangenen Person (1) ergibt.

13. Verfahren zum Melden und Orten einer über Bord gegangenen Person (1), **dadurch gekennzeichnet, dass** es folgende Schritte umfasst:
Bilden eines Netzwerks, das aus einer Vielzahl von Überwachungsmittel an der Oberflächen (302) besteht, wobei jedes der Mittel (302) dazu geeignet ist, ein Verfahren nach einem der Ansprüche 8 bis 12 zum Melden und Orten einer über Bord gegangenen Person (111), die mit einem persönlichen Element (211) ausgestattet ist, das ein Mittel zur persönlichen Anpassung beinhaltet, auszuführen;
bei längerem Ausbleiben des Empfangs der Ultraschallsignale, die von dem persönlichen Element (211) gesendet werden, als Antwort auf sekundäre Ultraschallsignale, Senden über Radiowellen an die Überwachungsmittel an der Oberfläche (302) einer Aufforderung zum Orten der über Bord gegangenen Person (111), sowie von Signalen, die das Mittel zum persönlichen Anpassen darstellen;
nach Empfang der Aufforderung Auslösen des Ausführens durch mindestens eines der Überwachungsmittel an der Oberfläche (302) eines Verfahrens zum Melden und Orten nach einem der Ansprüche 8 bis 12.

14. Verfahren zum Melden und Orten einer über Bord gegangenen Person (111) nach Anspruch 13, **dadurch gekennzeichnet, dass** es außerdem die folgenden sich wiederholenden Schritte umfasst:
Orten in regelmäßigen oder unregelmäßigen Zeitintervallen der über Bord gegangenen Person (111) durch Ausführen eines Verfahrens nach einem der Ansprüche 8 bis 12, um die Position abzulesen;
ständiges Ableiten der Position der über Bord gegangenen Person (111) je nach ihren zuvor abgelesenen Positionen;
in regelmäßigen oder unregelmäßigen Zeitintervallen Abfragen über Radiowellen jedes der Überwachungsmittel an der Oberfläche (302), um deren jeweilige Positionierungen zu speichern;
Einordnen der Überwachungsmittel an der Oberfläche (302) in ansteigender Reihenfolge ihrer jeweiligen Entfernungen zu der abgeleiteten Position;
Senden der Anforderung über Radiowellen auf dem Frequenzkanal des zuerst eingeordneten Überwachungsmittel an der Oberfläche (302);
nach Empfang der Anforderung Auslösen des Ausführens durch das Überwachungsmittel an der Oberfläche (302) eines Verfahrens zum Melden und Orten nach einem der Ansprüche 8 bis 12;
Wiederholen der vorhergehenden Schritte durch Abfragen der Überwachungsmittel an der Oberfläche in ansteigender Reihenfolge der Entfernung bis zum effektiven Standort der über Bord gegangenen Person (111).
